# EUROPÄISCHE PATENTANMELDUNG

(11) **EP 3 915 373 A1**
(43) Veröffentlichungstag der Anmeldung: **01.12.2021**
(21) Anmeldenummer: 20176476.8
(22) Anmeldetag: 26.05.2020
(51) Int. Cl.: A01N 59/00, A01N 59/16, A01P 1/00, C02F 1/72

(54) **BIOAKTIVE ZUSAMMENSETZUNG ZUR ABTÖTUNG VON ZELLEN**

(71) Anmelder: AGXX Intellectual Property Holding GmbH, 14169 Berlin (DE)
(72) Erfinder: Landau, Uwe, 14169 Berlin (DE); Meyer, Carsten, 10589 Berlin (DE); Wagner, Olaf, 12163 Berlin (DE); Abul-Ella, Ayad, 14057 Berlin (DE)
(74) Vertreter: Remus, Alvaro Johannes

(57) **Zusammenfassung**

Die Erfindung betrifft eine bioaktive Zusammensetzung zur Abtötung von Zellen, welche mindestens ein erstes und ein zweites Halbelement umfasst, wobei die Halbelemente zumindest mit ihren jeweiligen Oberflächen derart miteinander in elektrisch leitendem Kontakt stehen, dass in Gegenwart von Wasser und Sauerstoff Kurzschlusselemente entstehen. Erfindungsgemäß umfasst das erste Halbelement mindestens ein Übergangsmetallelement, das über mehrere Oxydationsstufen verfügt und über katalytisch aktive Zentren einen Wechsel der Oxidationsstufen erlaubt, so dass am ersten Halbelement Sauerstoff reduziert wird und aktive Sauerstoffspezies entstehen, und wobei das zweite Halbelement mindestens einen elektrisch leitfähigen Silberhalbleiter umfasst, der von den Zellen oder organischer Materie abgegebene Elektronen aufnimmt. Mittels mit der erfindungsgemäßen Zusammensetzung beschichteten Partikeln können beispielsweise E. coli-Bakterien sowohl bei einer Rutheniumoxid/Silberchlorid-Variante (a-c) als auch einer Rutheniumoxid/Silbersulfid-Variante (d-f) effektiv und zuverlässig abgetötet werden.

## Beschreibung

### Hintergrund der Erfindung

Die Erfindung betrifft eine bioaktive Zusammensetzung zur Abtötung von Zellen, welche mindestens ein erstes und ein zweites Halbelement umfasst, wobei die Halbelemente zumindest mit ihren jeweiligen Oberflächen derart miteinander in elektrisch leitendem Kontakt stehen, dass in Gegenwart von Wasser und Sauerstoff Kurzschlusselemente entstehen. Die Erfindung betrifft ferner die Verwendung der bioaktiven Zusammensetzung sowie ein Verfahren zur Herstellung der bioaktiven Zusammensetzung.

### Stand der Technik

Die steigende Resistenz von klinisch relevanten Bakterien gegen Antibiotika und Desinfektionsmittel, einhergehend mit der Fähigkeit Biofilme zu bilden, bedeutet ein ernsthaftes Problem hinsichtlich einer effektiven und dauerhaften Keimbekämpfung in der Gesundheitsfürsorge, Industrie und im privaten Bereich. Die Weltgesundheitsorganisation (WHO) warnt immer eindringlicher vor einer dramatischen Antibiotikakrise. Bakterielle Infektionen, die sich früher gut mit Antibiotika bekämpfen ließen, wären dann nicht mehr behandelbar. Es wird daher intensiv nach neuen antimikrobiellen Lösungen gesucht. Die gleiche Resistenzproblematik trifft auch auf sehr viele biozide Wirkstoffe zu. Antimikrobiell ausgestattete Materialien können aber dazu beitragen, das Ansiedeln, Wachstum und die Übertragung von Mikroorganismen an Oberflächen zu verhindern und so einen wichtigen Beitrag zur Lösung des Antibiotika- und Biozid-Problems leisten.

Älteste Beispiele für antimikrobielle Materialien sind die sogenannten oligodynamischen Metalle (z. B. Silber, Kupfer, Zink), die durch Abgabe von Metallionen wirken. Allerdings ist die antimikrobielle Wirkung dieser Stoffe in verschiedenen Umgebungsmedien häufig durch Inhibierung limitiert, z. B. durch schwefelhaltige Verbindungen.

Aus der WO 2008/046513 A2 ist eine bioaktive, Silber, Ruthenium und ein Vitamin enthaltende metallische Beschichtung bekannt, die zur Entkeimung, Desinfektion und Dekontamination von Wasser oder wässrigen Lösungen verwendet wird. Die Kombination von Silber mit Ruthenium und einem Vitamin, beispielsweise Ascorbinsäure, führt zu einer schnelleren und effizienteren Abtötung von Mikroorganismen. Gleichzeitig verhindern diese bioaktiven Metalloberflächen die Besiedelung mit Mikroorganismen und die Anheftung oder stabile Ablagerung von problematischen Biomolekülen wie zum Beispiel DNA, RNA oder Proteinen. Durch die Beschichtung entsteht eine sich selbst reinigende Oberfläche, die bei Kontakt mit Wasser oder wässrigen Lösungen sehr schnell und effizient dessen Keimfreiheit herstellt und über längere Zeiträume aufrechterhält.

Für eine bioaktive Beschichtung bestehend aus einer metallischen Silberschicht und einer metallischen Rutheniumschicht, die mit einem Vitaminderivat konditioniert wurde, postulieren Guridi et al. (2015) den folgenden Mechanismus für die antimikrobielle Aktivität der Beschichtung: Mikrogalvanische Elemente auf der Silber/Ruthenium-Oberfläche erzeugen ein elektrisches Feld, das auf die geladenen Membranen von Bakterienzellen einwirkt. An den Ruthenium-Mikrokathoden der galvanischen Zellen erzeugen katalytisch unterstützte Redoxreaktionen reaktive Sauerstoffspezies (ROS), z. B. diffusionsfähige Moleküle wie beispielsweise Wasserstoffperoxid, welche die Mikroorganismen abtöten und auf Agarplatten die Bildung von Hemmhöfen um entsprechend beschichtete Netze bewirken. An den Silber/Silberchlorid-Mikroanoden der galvanischen Zellen werden die Mikroorganismen durch den Transfer von Elektronen von den Mikroben zu der halbleitenden Anodenoberfläche oxidiert.

Biozide metallorganische Verbindungen werden, wie das Zinkpyrithion (ZnPT) oder das Kupferpyrithion (CuPT), in Industrie und Medizin (z. B. ZnPT in Haarwaschmitteln), Tributhylzinn (TBT) als Antifoulingzusatz zu Bootsanstrichen, Cisplatin (cis-Diamminodichloroplatin) und das als Fotosensibilisator wirkende Tris (2.2'- bipyrazyl)ruthenium(II) (Ru[bipy]²⁺) zur Krebsbekämpfung eingesetzt. Aufgrund ihrer z. T. großen Giftigkeit ist ihr Einsatz stark reguliert und wie im Fall des Tributhylzinn weitgehend verboten. Auch dem häufig eingesetzten Triclosan droht ein Verbot aufgrund des Verdachtes krebsauslösend zu sein.

Ferner sind Metalloxide in Kombination mit UV-Strahlung und der Zugabe von H₂O₂ antimikrobiell wirksam und werden industriell angewendet. Nachteile dieser Methode sind, dass für ihre Wirksamkeit elektrische Energie für die UV-Lampen eingesetzt und beständig H₂O₂ zugesetzt werden muss. Außerdem wird die UV-Einstrahlung in nicht-transparenten Flüssigkeiten reduziert, was bis zur antimikrobiellen Unwirksamkeit des Systems führen kann. Ein weiterer Nachteil besteht darin, dass das Anwendungsgebiet praktisch auf den Einsatz zur Wasserentkeimung beschränkt ist. UV-Lampen besitzen darüber hinaus eine begrenzte Lebensdauer, wobei der Anlagenstillstand und der teilweise aufwändige Umbau häufig die reinen Lampenkosten deutlich übersteigen.

### Beschreibung der Erfindung

Es ist Aufgabe der Erfindung, die genannten Nachteile des Stands der Technik, insbesondere bei der Verwendung von UV-Strahlern, zu vermeiden und eine bioaktive Zusammensetzung zur Abtötung von Zellen zur Verfügung zu stellen, die eine effiziente und langandauernde antimikrobielle Wirkung aufweist.

Die Aufgabe wird erfindungsgemäß dadurch gelöst, dass das erste Halbelement mindestens ein Übergangsmetallelement umfasst, das über mehrere Oxydationsstufen (Wertigkeiten) verfügt und über katalytisch aktive Zentren einen Wechsel der Oxidationsstufen erlaubt, so dass am ersten Halbelement Sauerstoff reduziert wird und aktive Sauerstoffspezies entstehen, und wobei das zweite Halbelement mindestens einen elektrisch leitfähigen Silberhalbleiter umfasst, der von den Zellen oder organischer Materie abgegebene Elektronen aufnimmt. Die vorliegende Erfindung umfasst somit in vorteilhafter Weise ein bioaktives Materialsystem, das jeweils aus einer halbleitenden, katalytisch aktiven Übergangsmetallverbindung (Halbelement I eines galvanischen Elementes) und einer halbleitenden, schwer löslichen Silberverbindung (z. B. Silbersulfid, Silber-Halogen-Verbindungen oder Kombinationen daraus; Halbelement II des galvanischen Elementes) besteht, wobei beide miteinander in direktem, elektrisch leitenden Kontakt stehen. Das Übergangsmetallelement des ersten Halbelements ist dabei erfindungsgemäß so ausgewählt, dass es über mehrere Oxydationsstufen verfügt und damit über katalytisch aktive Zentren einen (relativ leichten) Wechsel der Oxidationsstufen erlaubt. Besonders geeignete Halbelemente sind also solche, die mehrere Wertigkeiten aufweisen und an denen über einen großen Potentialbereich hoch reversible Redox-Reaktionen ablaufen können. Die hohe katalytische Aktivität solcher Halbelemente für die Sauerstoffreduktion ist dabei auf den leichten Wechsel der Oxydationsstufen sowie den leichten Sauerstoffaustausch zurückzuführen, die an den aktiven Zentren der Halbleiteroberfläche bevorzugt stattfinden. Dabei wird das Übergangsmetallelement nur in seiner Wertigkeit verändert, wodurch die eigentliche Redox-Reaktion entsteht. Deshalb wird keine Übergangsmetallverbindung verbraucht oder gebildet, sondern nur die Oxidationsstufen verändert. Die Übergangsmetallverbindung bindet den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also keine Übergangsmetallverbindung gebildet werden. Spezielle Metalloxide bzw. Metallsulfide und schwer lösliche Silberverbindungen weisen katalytische Eigenschaften, eine elektrische Leitfähigkeit und eine hohe Stabilität in Wasser auf. Durch geeignete Materialkombination sind zwei Materialien miteinander im elektrischen Kontakt, die ein unterschiedliches elektrochemisches Potential besitzen und somit eine galvanische Zelle bilden. Wird diese Zelle über die wässrige Phase kurzgeschlossen, entsteht aufgrund der geringen Distanz (µm-Bereich) zwischen den beiden sich kontaktierenden Materialien eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (Kathode) wird molekularer Sauerstoff zu Sauerstoffradikalen reduziert, die dann toxisch auf die Mikroorganismen wirken. Am zweiten Halbelement (Anode) werden Elektronen von den Mikroorganismen an den Silberhalbleiter abgegeben und diese dadurch oxidativ zerstört.

Die beiden Halbelemente können beispielsweise als Schichtsystem auf Oberflächen von Blechen, Drähten, Geweben oder partikulären Trägern ("Carrier") aufgebracht sein, wobei die Beschichtung des einen Materials über dem anderen Material liegt. Dabei kann die jeweils obere Schicht porös, insbesondere clusterförmig, auf das andere Material aufgetragen bzw. auf diesem abgeschieden werden, so dass die wässrige Lösung bzw. die Feuchtigkeit Zugang zu beiden Halbelementen hat und das galvanische Element kurzgeschlossen wird. Beide Materialien können aber alternativ oder zusätzlich auch als Partikel miteinander gemischt werden, so dass sie in elektrisch leitendem Kontakt stehen.

In einer besonders vorteilhaften Ausführungsform der Erfindung ist vorgesehen, dass das Übergangsmetallelement des ersten Halbelements Halbleitereigenschaften aufweist. Die erfindungsgemäß eingesetzten ersten Halbelemente, die zu einem Elektronentransfer zum Sauerstoff (O₂) befähigt sind, sind vorzugsweise Halbleiter mit Abweichungen von der stöchiometrischen Zusammensetzung, die vorzugsweise Kationen mit verschiedenen Oxidationsstufen an ihrer Oberfläche umfassen. Besonders geeignete Halbelemente sind dabei Oxide, Oxyhydrate, Hydroxide, Oxyhydroxide und/oder Sulfide der Übergangsmetallelemente, die in mehreren Oxidationsstufen vorliegen können, bei denen über einen großen Potentialbereich hoch reversible Redox-Reaktionen ablaufen können, die eine gute elektrische Leitfähigkeit besitzen und die eine gute chemische Stabilität aufweisen. Beispielsweise wird ein Metalloxid nur in seiner Wertigkeit verändert, wodurch die eigentliche Redox-Reaktion entsteht. Deshalb wird kein Oxid verbraucht oder gebildet, sondern nur die Oxidationsstufen verändert. Die Oxide binden den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also kein Metalloxid gebildet werden. In besonders vorteilhafter Ausgestaltung der Erfindung ist daher vorgesehen, dass das erste Halbelement mindestens ein Metalloxid, Metalloxyhydrat, Metallhydroxid, Metalloxyhydroxid und/oder mindestens ein Metallsulfid des Übergangsmetallelements umfasst. Die vorliegende Erfindung umfasst somit in vorteilhafter Weise ein bioaktives Materialsystem, das vorzugsweise jeweils aus einem halbleitenden, katalytisch aktiven Übergangsmetalloxid bzw. Übergangsmetallsulfid (Halbelement I des galvanischen Elementes) und einer halbleitenden, schwer löslichen Silberverbindung (Silbersulfid, Silber-Halogen-Verbindungen oder Kombinationen daraus; Halbelement II des galvanischen Elementes) besteht.

Ruthenium ist beispielsweise ein Edelmetall, das mehrere Oxidationszustände besitzt und aufgrund seiner unterschiedlichen Wertigkeiten in der Lage ist, unterschiedliche Ruthenium-Oxide zu bilden. Oberflächen-Redox-Übergänge wie Ru (VIII)/Ru (VI), Ru(VI)/Ru(IV), Ru(IV)/Ru(III) und möglicherweise Ru(III)/Ru(II) sind die Ursache für die hohe katalytische Aktivität der Ruthenium-Mischoxide und deren guten elektrischen Leitfähigkeit. Die ungewöhnlich ausgeprägten katalytischen und elektrokatalytischen Eigenschaften der Rutheniumoxid-Oberfläche hängen dabei von der Variation der Oxidationsstufen ab.

Das Übergangsmetallelement des ersten Halbelements ist daher vorzugsweise mindestens ein Metall aus der Gruppe bestehend aus Ruthenium, Iridium, Vanadium, Mangan, Nickel, Eisen, Cobalt, Cer, Molybdän und Wolfram. Als Übergangsmetallelementverbindungen sind in vorteilhafter Weise insbesondere Vanadiumoxide, Nickeloxide, Eisenoxide, Cobaltoxide, Ceroxide, Molybdänoxide und Wolframoxide geeignet, die aufgrund ihrer Eigenschaften auch als Superkondensatoren (Supercaps) bezeichnet werden. Außerdem sind sie Halbleiter.

Der Silberhalbleiter des zweiten Halbelements verfügt vorzugsweise über katalytische Aktivität. Beispielsweise reagieren die Zwischengitter-Silberionen in Silber-Halogenid-Kristallen mit eingefangenen Elektronen und bilden im weiteren Verlauf der Reaktion Silbercluster. Die Stellen, an denen die Elektronen eingefangen werden, sind die aktiven Zentren im Silber-Halogenid-Kristall. Das Silber-Halogenid wirkt dabei als Katalysator und wird nicht verbraucht. Wird das durch das Elektronentrapping reduzierte Silber anodisch wieder re-oxidiert, dann ergibt sich ein Kreislaufprozess, bei dem aber keine Silberionen aus dem Silberhalogenid-Kristall abgegeben werden. Alle Silberionen bleiben vielmehr in dem Silber-Halogenid-Kristall gebunden.

In weiterer vorteilhafter Ausgestaltung der Erfindung ist vorgesehen, dass der Silberhalbleiter des zweiten Halbelements so ausgewählt ist, dass er in wässrigen Lösungen eine geringe Löslichkeit aufweist und gegenüber Inhaltsstoffen in der wässrigen Lösung chemisch stabil ist. Beispielsweise besitzt Silber-Sulfid von allen anorganischen Verbindungen in weitem pH-Bereich die geringste Löslichkeit für das Metallion, so dass die Abgabe von Silberionen keine Rolle für die antimikrobielle Wirkung bei einem solchen Halbelement spielt.

Der Silberhalbleiter des zweiten Halbelements kann in vorteilhafter Weise mindestens ein Silberhalogenid oder Silbersulfid umfassen.

In vorteilhafter Ausgestaltung der Erfindung ist dabei vorgesehen, dass in das Halbleitergitter des Silberhalogenids Sulfid-Anionen eingebaut sind (Sulfid-Dotierung). Beispielsweise kann dabei im Halbleitergitter des Silberhalogenids ein Redox-Prozess stattfinden, so dass keine Silberionen abgegeben werden müssen, um die von den Zellen abgegebenen Elektronen aufnehmen zu können. Erfindungsgemäß bevorzugte sulfidische Halbelement-Systeme sind insbesondere Silbersulfid bzw. Silberchlorid/Silbersulfid mit Nickelsulfid und/oder Molybdänsulfid.

Die oben beschriebene erfindungsgemäße bioaktive Zusammensetzung ist vorzugsweise frei von Ascorbinsäure.

Die Erfindung betrifft ferner die Verwendung der oben beschriebenen erfindungsgemäßen bioaktiven Zusammensetzung zur Zerstörung/Abtötung von Mikroorganismen, Viren, Sporen, Fibroblasten und/oder Krebszellen.

Die Aufgabe wird auch durch ein Verfahren zur Herstellung der oben beschriebenen erfindungsgemäßen bioaktiven Zusammensetzung gelöst, bei dem das erste Halbelement in Form einer porösen (clusterförmigen) Schicht auf das zweite Halbelement aufgebracht wird, oder bei dem das zweite Halbelement in Form einer porösen (clusterförmigen) Schicht auf das erste Halbelement aufgebracht wird. Die beiden Halbelemente können also in vorteilhafter Weise als Schichtsystem auf Oberflächen, z. B. von Blechen, Drähten, Geweben oder partikulären Trägern ("Carrier"), aufgebracht werden. Dabei kann die jeweils obere Schicht porös, insbesondere clusterförmig, auf das andere Material aufgetragen bzw. auf diesem abgeschieden werden, so dass wässrige Lösungen bzw. Umgebungsfeuchtigkeit Zugang zu beiden Halbelementen haben und dadurch das galvanische Element kurzgeschlossen wird.

Das erste Halbelement kann beispielsweise in Schichtdicken von 2 nm bis 500 nm, vorzugsweise von 10 bis 100 nm, auf das zweite Halbelement aufgebracht werden.

In vorteilhafter Ausgestaltung der Erfindung ist vorgesehen, dass das jeweilige Halbelement sequenziell oder gleichzeitig mittels elektrochemischer Abscheidung, chemisch-reduktiver Abscheidung, elektrophoretischer Beschichtung, PVD-, CVD-und/oder Sol-Gel-Verfahren aufgebracht wird.

In vorteilhafter Ausgestaltung der Erfindung ist ferner vorgesehen, dass das zweite Halbelement mittels einer sulfidischen Behandlung in Silbersulfid (Ag₂S) umgewandelt wird und/oder dass ein Metallsulfid des ersten Halbelements durch sulfidische Behandlung eines Metalloxids/-hydroxids oder eines Metallhalogenids erzeugt wird.

In weiterer vorteilhafter Ausgestaltung der Erfindung ist vorgesehen, dass der Silberhalbleiter durch eine Reaktion in einer halogenid-haltigen wässrigen Lösung (z. B. chloridische Lösung) in ein Silberhalogenid umgewandelt wird.

Die beiden Halbelemente können beispielsweise auf Metallen, Glas oder Kunststoffen und/oder auf Trägerpartikeln (z. B. Glaspartikel, Silberpartikel, Kunststoffpartikel, Nanoton-Partikel, Cellulosefasern, Kohlenstoffpartikel oder Zeolith-Pulver) als mikroporöses Schichtsystem aufgebracht werden. Dabei können einzelne Halbelement-Partikel derart miteinander vermengt werden (z. B. durch Mörsern), dass sie in elektrisch leitendem Kontakt miteinander stehen.

In besonders vorteilhafter Ausgestaltung der Erfindung ist ferner vorgesehen, dass die Halbelement-Partikel in Wasser und Sauerstoff aufnehmende Medien wie Sol-Gele (z. B. Siloxane), Cremes, Hydrogele, Lacke, Farben, Putze, Kunststoffe (z. B. Polyamide) und Cellulose integriert werden.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge dessen Ionen (Metallkationen) in den Elektrolyten frei, die dann durch den Elektrolyten zur Kathode wandern und sich dort absetzen.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

### Beschreibung bevorzugter und beispielhafter Ausführungsformen der Erfindung

### Metalloxid- bzw. Metallsulfid-Halbelement I:

Viele Oxide der Nebengruppenmetalle zeigen eine hohe elektrokatalytische Aktivität in Bezug auf die Entwicklung bzw. Reduktion von Sauerstoff oder der Oxidation von organischen Verbindungen. Metalloxide sind Halbleiter, die z. T. über eine gute elektrische Leitfähigkeit verfügen. Für die Sauerstoffreduktion ist eine nichtstöchiometrische Zusammensetzung des Oxides wesentlich. Die elektrokatalytischen Eigenschaften und die elektrische Leitfähigkeit hängen von der Variation der Oxidationsstufen und der Beweglichkeit der Kationen, insbesondere in der Oberflächennähe ab. Reaktive Sauerstoffspezies, die an Feststoffoberflächen adsorbiert sind, sind wichtige Zwischenprodukte an der Flüssig/Feststoff-Phasengrenze, was insbesondere auf einige Metalloxide zutrifft. Sie sind bei diesen Metalloxiden-Oberflächen für deren antimikrobielle Eigenschaften verantwortlich. So werden beispielsweise hochreaktive Superoxidanionen-Spezies durch einen katalytischen Prozess gebildet [Anpo 1999, 189]. Wenn sich molekularer Sauerstoff im Kontakt mit der Metalloxid-Oberfläche befindet, können z. B. Superoxidanionen-Radikale (O²⁻) gebildet werden. Der elektrostatische Beitrag zur Stabilisierung der Anionen-Spezies auf das positive Ion an der Oberfläche spielt dabei eine fundamentale Rolle [Pacchioni 1996]. Superoxidanionen-Radikale sind nicht die einzigen Zwischenprodukte, die an Metalloxiden entstehen, sondern auch H₂O₂ und Hydroxylradikale OH* [Anpo 1999].

Oxide, die zu einem Elektronentransfer zum Sauerstoff (O₂) befähigt sind, sind in den meisten Fällen Halbleiter mit Abweichungen von der stöchiometrischen Zusammensetzung und besitzen Kationen mit verschiedenen Oxidationsstufen an ihrer Metalloxidoberfläche. Besonders geeignete Metalloxide für das erfindungsgemäße bioaktive Metalloxid-Silberhalbleiter-System sind Übergangsmetalloxide, die in mehreren Oxidationsstufen vorliegen können, bei denen über einen großen Potentialbereich hoch reversible Redox-Reaktionen ablaufen können, die eine gute elektrische Leitfähigkeit besitzen und die eine gute chemische Stabilität aufweisen (z. B. Rutheniumoxide, Iridiumoxide, Vanadiumoxide, Manganoxide, Nickeloxide, Eisenoxide, Cobaltoxide, Ceroxide, Molybdänoxide und Wolframoxide). Aufgrund dieser ausgezeichneten Eigenschaften sind mehrere dieser Metalloxide als Elektrodenmaterialien in sogenannten Superkondensatoren (supercaps) im Einsatz. Die hohe katalytische Aktivität für die Sauerstoffreduktion dieser Metalloxide ist auf den leichten Wechsel der Oxydationsstufen wie des leichten Sauerstoffaustausches zurückzuführen, die an den aktiven Zentren der Oberfläche bevorzugt stattfinden. Die meisten technisch interessanten Metalloxidbeschichtungen, besonders kohärente Oxid-Beschichtungen auf Metallen oder auf einem Halbleiter sind amorph, weil nur amorphe Filme dick genug wachsen können.

Die Reduktion von molekularem Sauerstoff an Übergangsmetalloberflächen mit etwas reduzierten Oxiden spielt eine wichtige Rolle bei den komplexen Redox-Reaktionen, die an der Übergangsmetalloxidoberfläche ablaufen können. Damit die an den Metalloxiden möglichen Redox-Reaktionen und die Reduktion von Sauerstoff zu reaktiven Sauerstoffspezies (ROS) dauerhaft ablaufen können, müssen die Metalloxide die Sauerstoffreduktion katalytisch unterstützen und Elektronen nachgeliefert werden. Dies kann überraschender Weise durch elektrisch leitende Koppelung geeigneter katalytisch aktiver Metalloxide bzw. Metallsulfide an Silberhalbleiterverbindungen sichergestellt werden. Durch die elektrische Koppelung entsteht ein galvanisches Element, in dem die Elektronen z. B. von der Silberhalbleiter-Elektrode durch Oxidation der Mikroorganismen an die Metalloxidoberfläche geliefert werden. Zu den Übergangsmetallhalbleitern, die über eine gute Elektronenleitung verfügen, gehören auch einige Metallsulfide wie das Nickelsulfid (NiS) und das Molybdändisulfid (MoS₂) mit katalytischer Aktivität, um reaktive Sauerstoffverbindungen wie H₂O₂ zu bilden.

### Silberhalbleiter-Halbelement II:

Die Phasengrenze Silber/Silbersulfid (Ag₂S) wird von zwei Phasen mit Elektronenleitung gebildet. Ag₂S kann auf einer Silberoberfläche einfach durch eine Tauchbehandlung in einer wässrigen Sulfid-haltigen Lösung erzeugt werden, was an der Dunkelfärbung während des Tauchvorgangs leicht verfolgt werden kann. Silber-Sulfid besitzt von allen anorganischen Verbindungen in weitem pH-Bereich die geringste Löslichkeit für das Metallion, so dass die Abgabe von Silberionen, wie bei der oligodynamischen antimikrobiellen Silbertechnologie, keine Rolle für die antimikrobielle Wirkung bei diesem Halbelement spielt. An der Phasengrenze NiS/Ag₂S treten keine ternären Phasen auf, so dass das chemische Potential des Schwefels im Gleichgewicht mit dem Ag₂S steht. Die beiden Metallsulfide im elektrisch leitenden Kontakt haben sich als überraschend wirksames bioaktives Schichtsystem erwiesen.

Molybdändisulfid (MoS₂) ist ein Elektronenleiter, dessen Leitfähigkeit und katalytische Aktivität, reaktive Sauerstoffspezies zu bilden, bei Belichtung noch zunimmt. Molybdändisulfid ist in Wasser und verdünnten Säuren nicht löslich. Silberhalogenide wie AgBr, AgCl, AgJ weisen im Gegensatz zu den Alkalihalogeniden hohe kovalente Bindungsanteile auf. Auf diese Struktureigenschaft, die auf der hohen Polarisierbarkeit des Silberions basiert, ist auch die geringe Löslichkeit der Silberhalogenide (AgX) zurückzuführen (AgCl > AgBr > AgJ > Ag₂S). Silberhalogenide können als intrinsische Halbleiter mit einer ausgeprägten Bandstruktur angesehen werden. Normalerweise liegt die Leitfähigkeit von AgX im Bereich der von Halbleitern. Wegen der höheren Beweglichkeit der Elektronen verhalten sich die Silberhalogenide wie n-Typ Halbleiter. Silberhalogenide (z. B. AgBr, AgCl, AgJ) werden z. B. in der Fotographie, aber auch für die photolytische Wasserzersetzung eingesetzt.

In der Realstruktur des Silberhalogenid-Kristalls treten als Folge von Defekten lokalisierte Energieniveaus innerhalb der verbotenen Zone, d. h. im energetischen Bereich zwischen Valenz- und Leitungsband, auf. Je nach energetischer Lage können diese als Elektronen-Donor oder Akzeptorfallen wirken. Zusätzlich zeigen reale Silberhalogenid-Kristalle auch strukturelle Fehlordnungen wie z. B. Verwerfungen, Stufen und Versetzungen. Diese spielen für die Ausbildung von aktiven Zentren im Silberhalogenid-Kristall eine wichtige Rolle [Baetzold 2001]. Die aktiven Zentren im Silberhalogenid-Kristall sind u.a. für die Prozesse in der Fotographie und bei der Fotolyse entscheidend. Es ist weithin akzeptiert, dass Zwischengitter-Silberionen mit eingefangenen Elektronen reagieren und Silbercluster bilden. Das Elektron wird an einer ausgezeichneten Stelle (aktives Zentrum) an der Oberfläche eingefangen. Das Zwischengitter-Silberion wandert zum eingefangenen Elektron. Im weiteren Verlauf bilden sich durch gleiche Reaktionen einige größere Silbercluster. An Silber-Bromid (AgBr ist dem AgCl sehr ähnlich) konnte gezeigt werden, dass z. B. der Foto-Mechanismus mit einem instabilen Silberatom beginnt. Während der Atomlebenszeit kann ein Elektron zum instabilen Atom diffundieren und ein Silber-Anion bilden, das anschließend ein Zwischengitter-Silberion neutralisieren kann:

Ag⁻ (im AgCl-Gitter) + Ag⁺ (AgCI-Zwischengitterplatz) → Ag₂(0) (im AgCl-Gitter)

Auf diese Weise kann das Silber-Atom Elektronen einfangen und nachfolgend zu einem dimeren Silber werden [Baetzold 2001]. Stellen, an denen die Elektronen eingefangen werden, sind die aktiven Zentren im Silber-Halogenid-Kristall. Das Silber-Halogenid wirkt als Katalysator und wird nicht verbraucht. Wird das durch das Elektronentrapping reduzierte Silber anodisch wieder re-oxidiert, dann ergibt sich ein Kreislaufprozess. Bei diesem Kreislaufprozess werden keine Silberionen aus dem AgCl-Kristall abgegeben. Alle Silberionen sind in dem Silber-Halogenid-Kristall gebunden. In das Silberchlorid-Gitter können durch eine sulfidische Behandlung Ag₂S-Teilchen gebildet werden, die in dem AgCl-Halbleiter ebenfalls als Elektronenfallen wirken und zusätzlich negative Ladungen einfangen können. Dieser Prozess entspräche dem Modell des "Ag₂S-Reifekeims" bei der Erklärung der fotographischen Elementarprozesse. Danach kann auch durch die AgCl/Ag₂S-Oberfläche des galvanischen Halbelementes, katalytisch unterstützt, die Aufnahme von Elektronen von Mikroorganismen und die oxidative Abtötung von Mikroorganismen erfolgen.

Die Erfindung wird im Weiteren anhand der folgenden Abbildungen und Beispiele exemplarisch näher erläutert.

### Kurze Beschreibung der Abbildungen

**Figur 1** zeigt eine fotografische Abbildung elektrochemisch präparierter Rutheniumoxid-Schichten auf Silber/Silberchlorid.
**Figur 2** zeigt fotografische Abbildungen von Teilen zweier Kulturplatten. Für die Bestimmung der antimikrobiellen Effizienz der Rutheniumoxid-Schichten auf Silber/Silberchlorid wurde eine Suspensionskultur mit Bakterien von E. coli (DSM 498, 10⁷/ml) mit 50 µl ausplattiert. Anschließend wurden die Probenbleche auf einen LB-Agar aufgebracht und für 18 h bei 37 °C inkubiert. Die beschichtete Probenseite ist mit einem Pfeil markiert.
   a) (a) 10 Zyklen, (b) 25 Zyklen, (c) 50 Zyklen [Pfeil: alle Proben zeigen einen großen Hemmhof];
   b) (b) Ruthenium-Pulver mit Silberpartikeln vermengt [kein Hemmhof], (c) Rutheniumoxid-Pulver* mit Silber/Silberchlorid-Partikeln*** vermengt [großer Hemmhof] (deutliche antimikrobielle Wirkung gegen 10 exp7 E. coli (DSM 498) mit 200 µl auf LB Agar ausplattiert und 18 h bei 37 °C inkubiert).

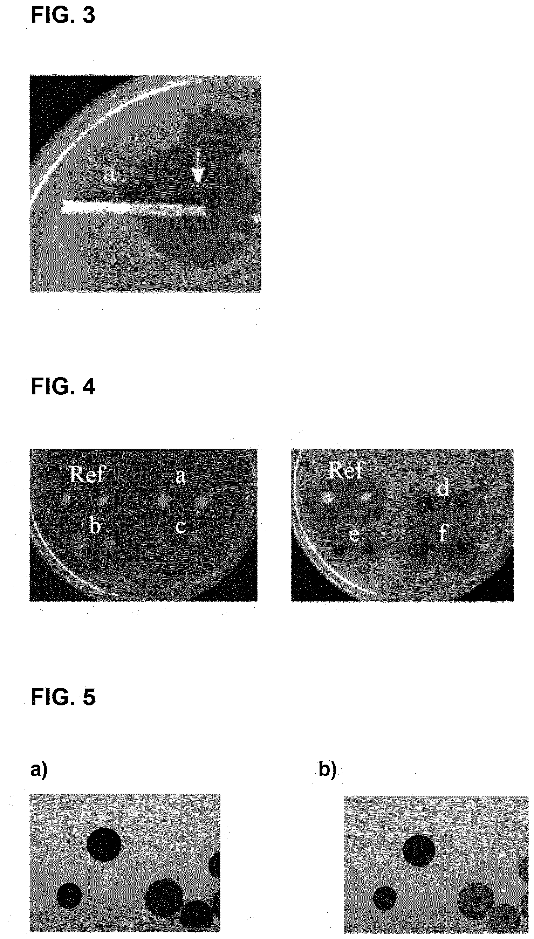

**Figur 3** zeigt eine fotografische Abbildung des Teils einer Kulturplatte. Eine mit K₂S-behandelte, elektrochemisch hergestellte poröse Rutheniumoxid-Schicht auf einem Silber-Blech zeigt eine sehr große antimikrobielle Wirksamkeit [sehr großer Hemmhof, der trotz partieller einseitiger Beschichtung (Pfeil) kantenumgreifend ist und auf die Bildung von Sauerstoffradikalen zurückgeführt werden kann]; (10 exp7 E. coli (DSM 498) mit 200 µl auf LB Agar ausplattiert und 18 h bei 37 °C inkubiert).
**Figur 4** zeigt fotografische Abbildungen von Teilen zweier Kulturplatten. Antimikrobielle Aktivität von elektrolytisch mit Rutheniumoxid porös beschichteten, versilberten Glaskügelchen (D = 40 µm), Ruthenium-Elektrolyt: Rutheniumnitrosylnitrat; Nachbehandlung in chloridischer Lösung mit Bildung von Silberchlorid der durch die Poren zugänglichen Silberoberfläche der Glaskügelchen; (10 exp7 E. coli (DSM 498) mit 200 µl auf LB Agar ausplattiert und 18 h bei 37 °C inkubiert). Nachbehandlung mit K₂S und unterschiedlicher Ruthenium-Beschichtungsdauer (t), die bei dem langsam abscheidenden Rutheniumnitrosylnitrat-Elektrolyten deutlich länger für die gleiche Schichtdicken als im Rutheniumchlorid-Elektrolyten dauert: a) Probe 42, t = 1 h; b) Probe 43, t = 2 h; c) Probe 44, t = 3 h; d) Probe 42, t = 1 h, Inkubation in K₂S; e) Probe 43, t = 2 h, Inkubation in K₂S; f) Probe 44, t = 3 h, Inkubation in K₂S.
**Figur 5** zeigt fotografische Abbildungen von Fibroblasten der Maus. Biozide Wirkung der Rutheniumoxid/Silberchlorid-Partikel (D = 40 µm) auf adhärente Mäusezellen: (a) Start; (b) nach 180 min (Rotfärbung (hier in schwarz/weiß nicht sichtbar) zeigt Abtötung der Mäusefibroblasten an).

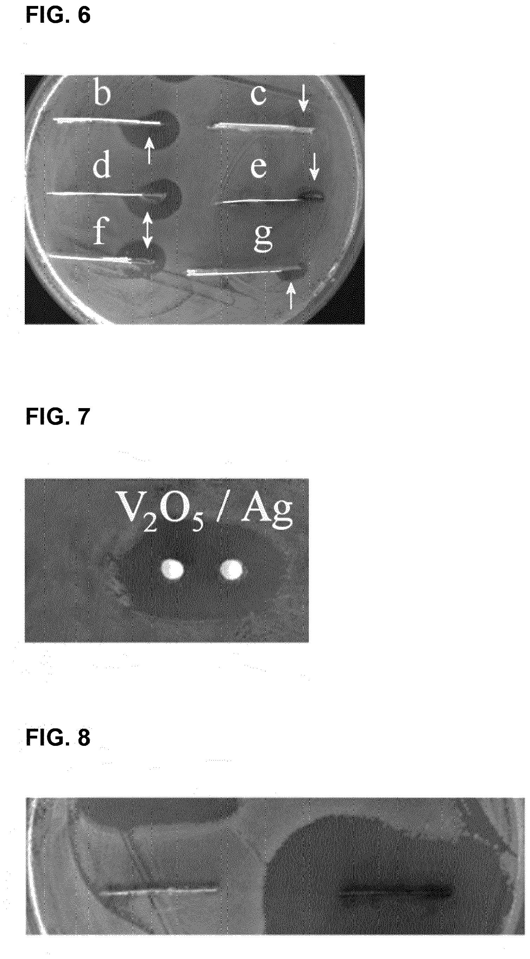

**Figur 6** zeigt eine fotografische Abbildung einer Kulturplatte. Antimikrobielle Effizienz von Vanadiumoxid-Schichten auf Silber/Silberchlorid- bzw. Silber/Silbersulfid-Blech; 10 exp7 E. coli (DSM 498) mit 200 µl auf LB Agar ausplattiert und 18 h bei 37 °C inkubiert):
   b) Vanadiumoxid auf Silber/Silberchlorid, 1 min Beschichtungsdauer;
   d) Vanadiumoxid auf Silber/Silberchlorid, 10 min Beschichtungsdauer;
   f) Vanadiumoxid auf Silber/Silberchlorid, 30 min Beschichtungsdauer;
   c) Vanadiumoxid auf Silber, 1 min Beschichtungsdauer, K₂S-Nachbehandlung;
   e) Vanadiumoxid auf Silber, 10 min Beschichtungsdauer, K₂S-Nachbehandlung;
   g) Vanadiumoxid auf Silber, 30 min Beschichtungsdauer, K₂S-Nachbehandlung.
**Figur 7** zeigt eine fotografische Abbildung des Teils einer Kulturplatte. Antimikrobielle Aktivität von Vanadiumoxid-Silber/Silberchlorid-Glaskügelchen (D = 40µm); 10 exp7 E. coli (DSM 498) mit 200 µl auf LB Agar ausplattiert und 18 h bei 37 °C inkubiert).
**Figur 8** zeigt eine fotografische Abbildung des Teils einer Kulturplatte. Antimikrobielle Aktivität von Nickeloxid-Silber/Silberchlorid und Nickelsulfid auf Silber/Silbersulfid-Blech; 10 exp7 E. coli (DSM 498) mit 200 µl auf LB Agar ausplattiert und 18 h bei 37 °C inkubiert).
   Links: Nickeloxid-Silber/Silberchlorid: Sehr geringe antimikrobielle Aktivität [sehr geringer Hemmhof];
   Rechts: Nickelsulfid-Silber/Silbersulfid: Überraschende starke antimikrobielle Aktivität [großer Hemmhof].

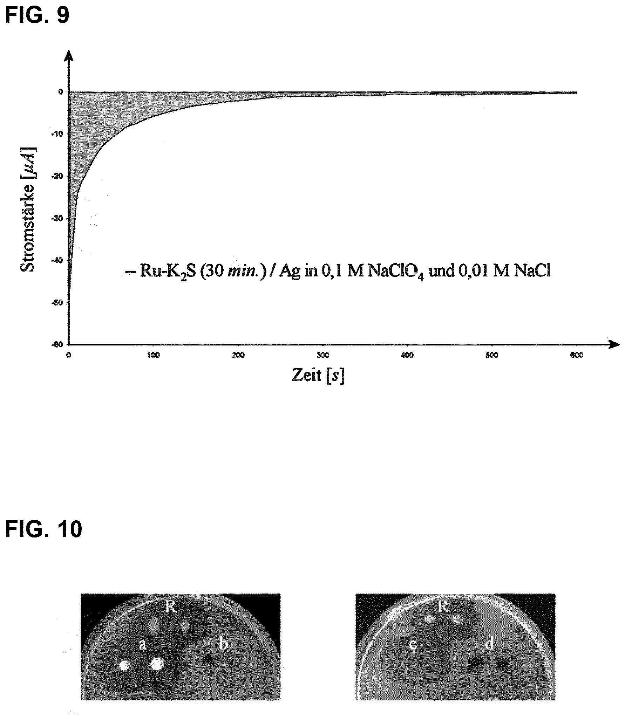

**Figur 9** zeigt eine Strom-Zeit-Kurve von Silber und Ruthenium bei Kurzschluss in 0,1 M NaClO4 und 0,01 M NaCl nach Inkubation der Ruthenium-Elektrode in 1-%iger Kaliumsulfid-Lösung für 30 Minuten.
**Figur 10** zeigt fotografische Abbildungen von Teilen zweier Kulturplatten zur Verdeutlichung der antimikrobiellen Aktivität von Pulvermischungen; a) Silber / Ruthenium nach Inkubation in K₂S; b) Silber / Rutheniumoxid nach Inkubation in K₂S; c) Silbersulfid / Ruthenium nach Inkubation in K₂S; d) Silbersulfid / Rutheniumoxid nach Inkubation in K₂S; R) Referenzprobe; Ref.-Nr. mB-003-2013.

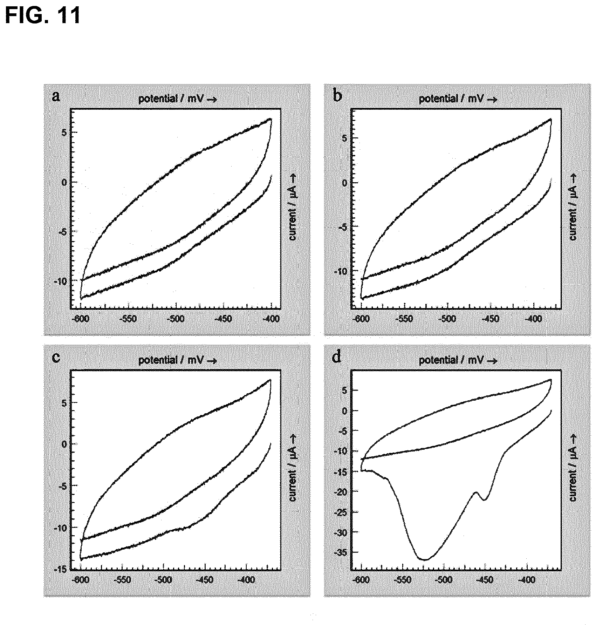

**Figur 11** zeigt Strom-Spannungskurven zur Reduktion der gebildeten Silberchlorid-Schicht für die Elektrodenkombination Ag / RuOₓ nach Inkubation der RuOₓ-Elektrode in 1 %-iger K2S; Strom-Spannungskurve vs. Ag/Ag⁺ (0,1 M), 10 mV/s; a) nach 1 Stunde; b) nach 2 Stunden; c) nach 3 Stunden; d) nach 4 Stunden.

### Beispiele

Für alle Versuche an Elektroden wurden reine Silberbleche oder Silberbeschichtungen als Beschichtungsunterlage gewählt, um potentiell störende Effekte durch Fremdmetalle auszuschließen.

### Beispiel 1: Poröse Rutheniumoxid-Schicht auf Silber/Silberchlorid

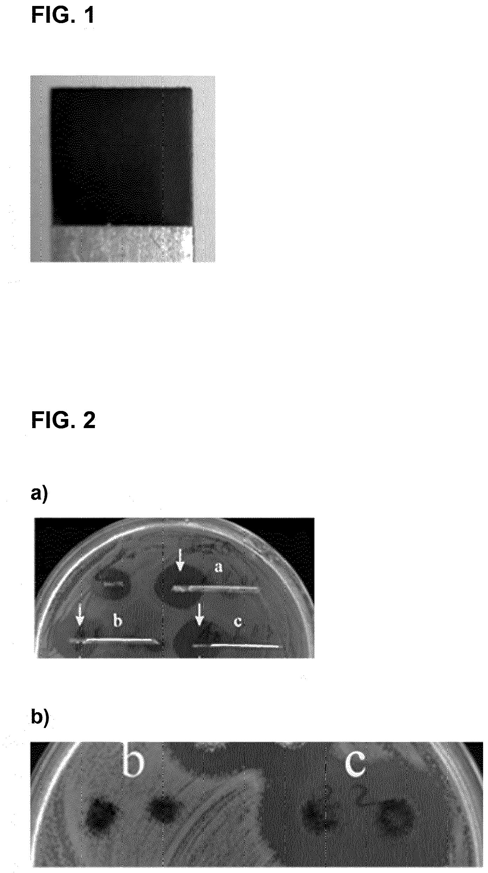

Um die antimikrobielle Aktivität des mikroporösen Rutheniumoxid-Netzwerkes auf Silber/Silberchlorid zu untersuchen, wurde wasserhaltiges Rutheniumoxid elektrochemisch auf Silberblech abgeschieden und die antimikrobielle Effizienz der Proben untersucht. Alle abgeschiedenen Schichten an Rutheniumoxid weisen eine dunkle, braungraue Farbe auf. **Figur 1** zeigt eine Rutheniumoxid-Schicht nach 10 Zyklen. XPS-Analysen haben gezeigt, dass in den elektrochemisch bzw. chemisch-reduktiv abgeschiedenen Rutheniumoxid-Schichten das Ruthenium in praktisch allen Oxydationsstufen nachzuweisen war.

Abscheidung der Ruthenium-Oxidschichten auf Silber: Auf einseitig poliertem Silberblech (1,0 cm x 2,5 cm) wurde wasserhaltiges Rutheniumoxid (RuOₓ · nH₂O) abgeschieden. Die beschichtete Fläche betrug jeweils 0,5 cm x 1,0 cm. Die Abscheidung der Oxidschicht erfolgte durch elektrochemisches Zyklisieren der Silberbleche in einem Potentialbereich von 0 V bis 0,84 V vs. NHE. Der verwendete Elektrolyt bestand aus 0,005 M RuCl₃, 0,01 M HCl und 0,1 M KCl bei einer Temperatur von 50°C. Die Abscheidung erfolgte in 10, 25 und 50 Zyklen. Da die Rutheniumoxid-Schicht aus einem Chlorid-haltigen Elektrolyten erfolgte, wurde die frei liegende Silberoberfläche direkt in Silberchlorid umgewandelt.

Für alle Proben ließ sich eine sehr gute antimikrobielle Aktivität feststellen. Bereits für eine Beschichtungsdauer von 10 Zyklen hat sich ein Hemmhof maximaler Ausdehnung gebildet (**Figur 2a(a)**). Durch die Verlängerung der Beschichtungsdauer auf 25 Zyklen (**Figur 2a(b)**) bzw. auf 50 Zyklen (**Figur 2a(c)**) ließ sich keine weitere Steigerung der antimikrobiellen Effizienz erzielen. Obwohl die Rückseite der Proben abgeklebt worden war, zeigt sich dort eine ähnlich hohe antimikrobielle Aktivität, wie an der beschichteten Seite der Proben, was durch die gebildeten Sauerstoffradikale und das mikroelektrische Feld erklärt werden kann.

Überraschenderweise konnte eine deutliche antimikrobielle Wirkung auch durch ein Gemenge von Rutheniumoxid mit Silberchlorid-Partikeln erzielt werden.

In **Figur 2b** ist zu erkennen, dass Rutheniumoxid-Pulver*, im Mörser mit Silberchlorid beschichteten kleinen Silberpartikeln vermengt, einen großen Hemmhof auf dem Agar ausbilden und damit hohe antimikrobielle Wirkung zeigen (Probe c). Gleiches gilt auch für Rutheniumoxidhydroxyd-Pulver** (nicht im Bild gezeigt). Überraschender Weise zeigt reines Ruthenium-Pulver, vermengt mit kleinen Silberpartikeln, keinen Hemmhof und damit keine antimikrobielle Wirkung (Probe b). Dieser Versuch zeigt die Bedeutung der Rutheniumoxidbildung und des halbleitenden Silberchlorids für die antimikrobielle Ausrüstung.
[(*) Herstellung von Rutheniumoxid:
Ruthuna 478 Lösung wird mit Kaliumhydroxyd (10g/l) und Wasserstoffperoxid (5%) versetzt. Der schwarze Niederschlag wird abzentrifugiert, mehrfach mit destilliertem Wasser und Ethanol gewaschen und im Trockenschrank bei 70 °C getrocknet.
(**) Herstellung von Rutheniumoxidhydroxyd:
Ruthuna 478 Lösung wird mit Kaliumhydroxyd (10 g/l) im Verhältnis 1:1 versetzt. Nach 1 Woche wird der braune, flockige Niederschlag abzentrifugiert, mit destilliertem Wasser und Ethanol mehrfach gewaschen und im Trockenschrank bei 70 °C getrocknet.]

### Beispiel 2: Poröse Rutheniumoxid-Schicht auf Silber/Silbersulfid

Die Silbersulfid-Schicht wurde auf der mit porösem Rutheniumoxid-Netzwerk beschichteten Silber-Elektrode durch 5 min Tauchzeit in eine 1 %-ige Kaliumsulfid-Lösung bei Raumtemperatur erzeugt. Dabei bildete sich eine dunkle Silbersulfid-Schicht auf dem unter dem Rutheniumoxid-Netzwerk freiliegenden Silberblech aus. Gleiches Resultat wurde auch bei einer 30-minütigen Tauchzeit erzeugt, wobei die Silbersulfid-Schicht lediglich eine dunklere Färbung aufwies.

Die Rutheniumoxid-Silber/Silbersulfid-Oberfläche zeigte, dass die antimikrobielle Effizienz der Probe nach einer elektrochemischen Rutheniumoxid Abscheidungsdauer mit 10 Zyklen durch die Sulfidbehandlung noch einmal erheblich gesteigert wird (**Figur 3**). Der Durchmesser des Hemmhofes hat sich etwa gegenüber der Rutheniumoxid/Silberchlorid-Oberfläche verdoppelt. Aufgrund der äußerst geringen Silbersulfid-Löslichkeit (Löslichkeitsprodukt: 8x10exp -51 (25 °C)) kann eine Wirkung von Silberionen, wie in einem oligodynamischen Silbersystem, ausgeschlossen werden.

Das Aufbringen von porösen Rutheniumoxid-Schichten kann auch elektrolytisch oder chemisch-reduktiv auf partikulären Carriern, wie z. B. Glaskügelchen (D=40 µm) erfolgen. In **Figur 4** ist die antimikrobielle Wirkung von versilberten Glaskügelchen mit Rutheniumoxid-Beschichtung gezeigt, auf denen sowohl Silberchlorid als auch Silbersulfid in den durch das mikroporöse Rutheniumoxid-Netzwerk frei liegenden versilberten Oberfläche ausgebildet worden ist. Als Basis für den Chlorid- und Sulfid-freien Ruthenium-Elektrolyt diente in diesem Fall Rutheniumnitrosylnitrat. Silberchlorid wurde in den nicht mit Rutheniumoxid bedeckten Stellen der mikroporösen Abscheidungsstruktur durch eine Nachbehandlung in einer chloridischen Lösung gebildet. Das Silbersulfid wurde durch eine nachträgliche Behandlung mit einer 1%-igen Kaliumsulfid-Lösung bei Raumtemperatur ausgebildet. Wie in der **Figur 4** zu sehen, werden die *E*. *coli-*Bakterien sowohl bei der Rutheniumoxid/Silberchlorid-Variante (a-c) als auch der Rutheniumoxid/Silbersulfid-Variante (d-f) abgetötet. Nach der Inkubation in chloridischer Lösung weisen die Rutheniumoxid-Silberchlorid-Kügelchen durchgängig eine sehr hohe antimikrobielle Effizienz auf (Abb. 4a-c). Nach der Inkubation in Kaliumsulfid-Lösung erkennt man, dass die antimikrobielle Aktivität des Rutheniumoxid/Silbersulfid-Systems mit steigender Abscheidungsdauer von Rutheniumoxid ansteigt (Abb. d → f).

Die Glaskugeln mit der Rutheniumoxid/Silberchlorid-Oberfläche wurden auch gegen Mäusefibroblasten getestet. Wie **Figur 5** zeigt, besitzen die mit diesem Halbleitersystem beschichteten Glaskügelchen ebenfalls eine hohe biozide Wirksamkeit gegenüber adhärenten Mäusefibroblasten, was an der in der Fluoreszenzmikroskopie rot erscheinenden abgetöteten Mäusefibroblasten abzulesen ist.

### Beispiel 3: Poröse Vanadiumoxid-Schicht auf Silber/Silberchlorid bzw. Silber/Silbersufid

Vanadiumoxid wurde elektrochemisch auf Silber/Silberchlorid-Blech abgeschieden. Auf einem Silberblech (1,0 cm x 2,5 cm) wurde bei einer Stromdichte von 1 mA/cm² NH₄V₃O₈ · 0,5 H₂O anodisch abgeschieden. Die beschichtete Fläche betrug 0,5 cm x 1,0 cm. Die Abscheidung erfolgte aus einer 0,15 M Lösung von Ammoniummetavanadat bei einer Temperatur von 50°C. Die Abscheidungsdauer betrug 1, 10, 30 min und 1 h. Es bildete sich ein orangebrauner Niederschlag auf dem Silberblech. Durch das Tempern der Proben für 24 h bei 300 °C entstand eine einheitliche Schicht an Vanadiumoxid. Dickere Schichten von Vanadiumoxid lösten sich jedoch vom Silbersubstrat ab. Dies betraf die beiden Proben, die mit einer Abscheidungsdauer von 30 und 60 min präpariert wurden. Dennoch wurde die Probe für eine Abscheidungsdauer von 30 min auf ihre antimikrobielle Aktivität untersucht. Bereits für eine Abscheidungsdauer von 1 min lässt sich eine sehr hohe antimikrobielle Effizienz erzielen **(****Figur 6****,** Proben b, d, f). Die beschichtete Seite ist mit einem Pfeil markiert. Für eine Abscheidungsdauer von 10 min ist allerdings keine weitere Steigerung der antimikrobiellen Aktivität erkennbar **(****Figur 6****,** Probe d). **Figur 6****,** Probe f zeigt die antimikrobielle Aktivität einer Probe nach einer Abscheidungsdauer von 30 min, wobei sich jedoch der größte Teil der Beschichtung abgelöst hatte. Dennoch verfügt diese Probe über eine unvermindert hohe antimikrobielle Effizienz. Daher kann man davon ausgehen, dass bereits sehr dünne Schichten von Vanadiumoxid auf Silber eine hohe antimikrobielle Aktivität entfalten. Weitere Proben wurden zusätzlich für 5 min mit 1 %iger Kaliumsulfid-Lösung behandelt, so dass sich in den freien Räumen des porösen Vanadiumoxid-Netzwerkes eine Silbersulfid-Schicht ausbilden konnte. Die antimikrobielle Effizienz der Proben mit Silber/Silbersulfid-Halbelementen sind in **Figur 6****,** Proben c, e, g dargestellt. Die beschichtete Seite ist mit einem Pfeil markiert. Durch die Bildung der Silbersulfid-Schicht auf der nur 1 min mit Vanadiumoxid beschichteten Probe war kein Hemmhof auf dem Agar erkennbar **(****Figur 6****,** Probe c). Bei der längeren Abscheidungszeit entstehen dickere Vanadiumoxid-Schichten, die eine antimikrobielle Aktivität aufzeigen (**Figur 6**, Proben e, g). Obwohl bei der dickeren Vanadiumoxid-Schicht nach 30 min ein Teil der Oxidschicht abgeplatzt und nurmehr eine dünne Vanadiumoxid-Schicht zurückgeblieben war, zeigte diese von den untersuchten Vanadiumoxid-Silber/Silbersulfid-Schichten den größten Hemmhof und somit eine vergleichsweise hohe antimikrobielle Aktivität nach der Behandlung mit K₂S (**Figur 6**, Probe g). Dieses Ergebnis weist auf die Bedeutung der unterschiedlichen Oxidationszustände in der Oxidschicht hin. Bei der anodischen Abscheidung der Vanadiumoxid-Schicht ändert sich bei galvanostatischer Arbeitsweise das Elektrodenpotential mit wachsender Schichtdicke, so dass sich verschiedene Oxidationszustände des Vanadium-Kations ausbilden können und sich damit auch die katalytischen Eigenschaften verbessern.

Die elektrolytische Abscheidung von porösem Vanadiumoxid wurde auch auf Silber/Silberchlorid beschichteten partikulären Carriern erfolgreich durchgeführt. Für die elektrolytische Beschichtung der versilberten Glaskugeln mit Vanadiumoxid wurde das Trommelbeschichtungsverfahren angewandt. Es erfolgte für 15 min bei einer Umdrehungszahl von 340 U/min und einem Neigungswinkel von 70° die anodische Abscheidung aus Vanadiumoxid aus einer 0,15 M Lösung von Ammoniummetavanadat bei einer Spannung von 2,5 V. Nach der Sedimentation der beschichteten Perlen wurde der Elektrolyt dekantiert und die beschichteten Glaskugeln viermal mit 400 ml destilliertem Wasser gewaschen. Die Perlen wurden anschließend für 24 h bei einer Temperatur von 300 °C getempert, wobei sich Vanadiumoxid bildet. Man erhält helle, graubraune Perlen, die über eine hohe antimikrobielle Aktivität verfügen. **Figur 7** zeigt die antimikrobielle Effizienz der präparierten Glaskügelchen.

### Beispiel 4: Nickeloxid bzw. Nickelsulfid-Silber/Silbersulfid

Nach der Behandlung der Silber-Bleche mit Nickelchlorid (konz. NiCl2 *6 H2O, 24 h Tauchzeit, RT) ist optisch keine Veränderung der Silberprobenoberfläche zu beobachten. Das bedeutet, dass unter den beschriebenen Abscheidebedingungen eine nur sehr dünne Nickelbekeimung der Silberoberfläche erfolgt ist. Es ist daher nur eine sehr geringe antimikrobielle Aktivität der Probe erkennbar, da wenig Nickeloxid entstanden ist (**Figur 8**, links). Die antimikrobielle Wirkung wird durch die Abscheidung einer dickeren Nickeloxid-Schicht deutlich verbessert.

Interessant und unerwartet waren dagegen die Ergebnisse mit der sulfidischen Behandlung dieses nur mit Nickelkeimen ausgerüsteten Schichtsystems. Nach der Behandlung mit Kaliumsulfid bildet sich Nickelsulfid auf den auf der Silberoberfläche abgeschiedenen Nickelkeimen aus. Dabei wird auch in den freien und mit Silberchlorid bedeckten Silberoberflächenbereichen durch die K₂S-Behandlung das Silberchlorid durch das schwer lösliche Silbersulfid ersetzt. Das Schichtsystem Nickelsulfid-Silber/Silbersulfid zeigt überraschender Weise eine sehr hohe antimikrobielle Wirkung (**Figur 8**, rechts).

### Beispiel 5: Nachbehandlung der Halbelemente mit Sulfid-Ionen

Es wurde weiterhin untersucht, welchen Einfluss Sulfid-Ionen auf die Ruthenium-Elektrode ausüben. Die polierte Ruthenium-Elektrode wurde daher für 30 min in 1-%iger Kaliumsulfid-Lösung inkubiert. Anschließend erfolgte der Kurzschluss der Ruthenium-Elektrode gegen die Silber-Elektrode. Als Elektrolyt wurde 0,1 M Natriumperchlorat und 0,01 M Natriumchlorid verwendet. Durch die Inkubation der Ruthenium-Elektrode in Sulfid-haltiger Lösung wird deren Potential so stark in den negativen Potentialbereich verschoben, dass sich die Prozesse an den Elektroden umkehren. So erfolgt die Oxidation an der Ruthenium-Elektrode, während hingegen die Reduktion an der Silber-Elektrode abläuft. Die veränderten elektrochemischen Prozesse an den beiden Elektroden wirken sich auch auf die antimikrobielle Effizienz aus.

Eine Mischung von Silberpulver mit Rutheniumpulver, das zuvor in Kaliumsulfid-Lösung inkubiert war, zeigt eine unvermindert hohe antimikrobielle Wirkung (**Figur 10** **a**). Wird der K2S-Versuch hingegen mit Rutheniumoxid-Pulver, das nach der K2S-Behandlung mit unbehandeltem Silberpulver vermischt wurde, durchgeführt, so ist keinerlei antimikrobielle Effizienz erkennbar (**Figur 10** **b**). Die Behandlung von Rutheniumoxid in Kaliumsulfid-Lösung inhibiert somit vollständig die antimikrobielle Wirkung der Probenmischung.

Ein identisches Bild ergibt sich, wenn neben Ruthenium bzw. Rutheniumoxid auch das verwendete Silberpulver zuvor in Kaliumsulfid-Lösung inkubiert wurde. Eine entsprechende Mischung von Silbersulfid mit K2S behandeltem Ruthenium ergibt eine antimikrobielle Wirkung (**Figur 10** **c**), während hingegen die Mischung von Silbersulfid mit K2S behandeltem Rutheniumoxid keine antimikrobiellen Eigenschaften aufweist. (**Figur 10** **d**)

Das Ergebnis bestätigt einerseits, dass die Bildung von Silbersulfid keine nachteilige Wirkung auf die antimikrobiellen Eigenschaften der Probenmischungen ausübt. Andererseits besteht ein Unterschied zwischen Proben, die mit Ruthenium bzw. mit Rutheniumoxid angesetzt wurden. Offenbar reagieren Rutheniumoxid und Sulfid-Ionen zu einer stabilen chemischen Verbindung, die in Kombination mit Silber keine antimikrobiellen Substanzen freisetzt. Neben dem Verlust der katalytischen Aktivität der neu gebildeten Substanz könnte hierbei auch die Änderung der Potentiallagen oder eine verminderte elektrische Leitfähigkeit eine Rolle spielen. Eine Erklärung für die unvermindert hohe antimikrobielle Aktivität der Proben mit Sulfidbehandeltem Rutheniumpulver liefert die Strom-Zeit-Kurve gemäß **Figur 9****.** Nach der Inkubation der Ruthenium-Elektrode in Kaliumsulfid-Lösung hat sich eine dünne Deckschicht an Rutheniumsulfid gebildet. Durch den Kontakt mit Silber wird die Deckschicht oxidativ aufgelöst, so dass sich erneut eine katalytisch wirksame Schicht von Rutheniumoxid an der Elektrodenoberfläche bilden kann und sich die elektrochemischen Prozesse schließlich umkehren. Gemäß **Figur 9** fällt der Strom innerhalb der ersten vier Minuten deutlich ab. Auch nach 10 min stellt sich kein konstanter Strom ein. Zu diesem Zeitpunkt erfolgt die Oxidation jedoch noch an der Ruthenium-Elektrode. Nach 40 min ist zwischen beiden Elektroden kein Strom mehr messbar. Die anodischen und kathodischen Prozesse an den Elektroden heben sich gegenseitig auf. Anschließend kehrt sich die Polarität der Elektroden um, so dass die Silber-Elektrode nun die Anode darstellt, während an der Ruthenium-Elektrode wieder die Reduktion erfolgt. Die Reaktion von Ruthenium mit Kaliumsulfid ist somit nicht irreversibel, und nach einer Kurzschlussdauer von 4 Stunden ist an der Silber-Elektrode wieder ein anodischer Strom von 0,2 µA messbar.

Die Umkehrung der Elektrodenprozesse lässt sich auch anhand der nachfolgenden Bildung von Silberchlorid im Chlorid-haltigen Elektrolyten an der Silber-Elektrode verfolgen **(****Fig. 11****).** Nach einer Kurzschlussdauer von 1 h **(****Fig. 11 a)** sowie 2 h **(****Fig 11 b)** ist die Bildung von Silberchlorid im CV-Diagramm noch nicht nachweisbar. Zu diesem Zeitpunkt ist an der Silber-Elektrode bereits ein anodischer Strom messbar, der jedoch sehr gering ausfällt. Erst nach 3 h ist eine kleine Stromwelle der Reduktion von Silberchlorid erkennbar **(****Fig. 11 c)****.** Nach 4 h erhält man jedoch im CV-Diagramm ein ausgeprägtes Stromsignal für die Silberchlorid-Reduktion **(****Fig. 11 d)****.**

### Literatur:

- [Guridi 2015]: Guridi, A., Diederich, A.-K., Aguila-Arcos, S., Garcia-Moreno, M., Blasi, R., Broszat, M., Schmieder, W., Clauss-Lendzian, E., Sakinc-Gueler, T., Andrade, R., Alkorta, I., Meyer, C., Landau, U., and Grohmann, E.: Materials Science and Engineering C50 (2015) 1-11
- [Anpo 1999]: Anpo, M., Che, M., Fubini, B., Garrone, E., Giamello, E., and Paganini, M. C.: Topic in Catalysis 8 (1999) 189-198
- [Paccioni 1996]: Pacchioni, G., Ferrari, A., Giamello, E.: Chem. Phys. Lett. 255(1996) 58
- [Baetzold 2001]: Baetzold, R. C.: J. Phys. Chem. B 2001, 105, 3577-3586

## Patentansprüche

1. Bioaktive Zusammensetzung zur Abtötung von Zellen, welche mindestens ein erstes und ein zweites Halbelement umfasst, wobei die Halbelemente zumindest mit ihren jeweiligen Oberflächen derart miteinander in elektrisch leitendem Kontakt stehen, dass in Gegenwart von Wasser und Sauerstoff Kurzschlusselemente entstehen,
wobei das erste Halbelement mindestens ein Übergangsmetallelement umfasst, das über mehrere Oxydationsstufen verfügt und über katalytisch aktive Zentren einen Wechsel der Oxidationsstufen erlaubt, so dass am ersten Halbelement Sauerstoff reduziert wird und aktive Sauerstoffspezies entstehen, und wobei das zweite Halbelement mindestens einen elektrisch leitfähigen Silberhalbleiter umfasst, der von den Zellen oder organischer Materie abgegebene Elektronen aufnimmt.

2. Bioaktive Zusammensetzung nach Anspruch 1, **dadurch gekennzeichnet, dass** das Übergangsmetallelement des ersten Halbelements Halbleitereigenschaften aufweist.

3. Bioaktive Zusammensetzung nach Anspruch 1 oder 2, **dadurch gekennzeichnet, dass** das erste Halbelement mindestens ein Metalloxid, Metalloxyhydrat, Metallhydroxid, Metalloxyhydroxid und/oder mindestens ein Metallsulfid des Übergangsmetallelements umfasst.

4. Bioaktive Zusammensetzung nach einem oder mehreren der Ansprüche 1 bis 3, **dadurch gekennzeichnet, dass** das Übergangsmetallelement des ersten Halbelements mindestens ein Metall aus der Gruppe bestehend aus Ruthenium, Iridium, Vanadium, Mangan, Nickel, Eisen, Cobalt, Cer, Molybdän und Wolfram ist.

5. Bioaktive Zusammensetzung nach einem oder mehreren der Ansprüche 1 bis 4, **dadurch gekennzeichnet, dass** der Silberhalbleiter des zweiten Halbelements über katalytische Aktivität verfügt.

6. Bioaktive Zusammensetzung nach einem oder mehreren der Ansprüche 1 bis 5, **dadurch gekennzeichnet, dass** der Silberhalbleiter des zweiten Halbelements in wässrigen Lösungen eine geringe Löslichkeit aufweist und gegenüber Inhaltsstoffen in der wässrigen Lösung chemisch stabil ist.

7. Bioaktive Zusammensetzung nach einem oder mehreren der Ansprüche 1 bis 6, **dadurch gekennzeichnet, dass** der Silberhalbleiter des zweiten Halbelements mindestens ein Silberhalogenid oder Silbersulfid umfasst.

8. Bioaktive Zusammensetzung nach Anspruch 7, **dadurch gekennzeichnet, dass** in das Halbleitergitter des Silberhalogenids Sulfid-Anionen eingebaut sind.

9. Verwendung der bioaktiven Zusammensetzung nach einem oder mehreren der Ansprüche 1 bis 8 zur Zerstörung/Abtötung von Mikroorganismen, Viren, Sporen, Fibroblasten und/oder Krebszellen.

10. Verfahren zur Herstellung der bioaktiven Zusammensetzung nach einem oder mehreren der Ansprüche 1 bis 8, **dadurch gekennzeichnet, dass** das erste Halbelement in Form einer porösen Schicht auf das zweite Halbelement aufgebracht wird, oder dass das zweite Halbelement in Form einer porösen Schicht auf das erste Halbelement aufgebracht wird.

11. Verfahren nach Anspruch 10, **dadurch gekennzeichnet, dass** das jeweilige Halbelement sequenziell oder gleichzeitig mittels elektrochemischer Abscheidung, chemisch-reduktiver Abscheidung, elektrophoretischer Beschichtung, PVD-, CVD- und/oder Sol-Gel-Verfahren aufgebracht wird.

12. Verfahren nach Anspruch 10 oder 11, **dadurch gekennzeichnet, dass** das zweite Halbelement mittels einer sulfidischen Behandlung in Silbersulfid (Ag₂S) umgewandelt wird und/oder dass ein Metallsulfid des ersten Halbelements durch sulfidische Behandlung eines Metalloxids/-hydroxids oder eines Metallhalogenids erzeugt wird.

13. Verfahren nach einem oder mehreren der Ansprüche 10 bis 12, **dadurch gekennzeichnet, dass** der Silberhalbleiter durch eine Reaktion in einer halogenid-haltigen wässrigen Lösung in ein Silberhalogenid umgewandelt wird.

14. Verfahren nach einem oder mehreren der Ansprüche 10 bis 13, **dadurch gekennzeichnet, dass** die beiden Halbelemente auf Metallen, Glas oder Kunststoffen und/oder auf Trägerpartikeln als mikroporöses Schichtsystem aufgebracht werden.

15. Verfahren nach Anspruch 14, **dadurch gekennzeichnet, dass** die Halbelement-Partikel in Wasser und Sauerstoff aufnehmende Medien wie Sol-Gele, Cremes, Hydrogele, Lacke, Farben, Putze, Kunststoffe und/oder Cellulose integriert werden.
